# EUROPEAN PATENT APPLICATION

(11) **EP 0 857 620 A1**
(43) Date of publication of application: **12.08.1998**
(21) Application number: 98200059.8
(22) Date of filing: 12.01.1998
(51) Int. Cl.: B60R 19/56, B60R 19/42, B60R 19/38

(54) **Side screening for a vehicle**

(30) Priority: 10.01.1997 NL 1004967
(71) Applicant: Transplus Components B.V., 2840 AB Moordrecht (NL)
(72) Inventor: Borgdorff, Pieter, 2841 TG Moordrecht (NL)
(74) Representative: Jilderda, Anne Ayolt

(57) **Abstract**

A side screening for a vehicle comprises at least one support body (5) which is to be fastened to a chassis of the vehicle and an elongate, possibly flat panel (2) which is to be received on the support body (5). The panel comprises over at least part of its length at least one elongate support profile (6) in which a fastening member (7) is to be movably accommodated. The fastening member (7) is capable of cooperating with a support body (5) so as to achieve a secure connection between the panel (2) and the support body (5).

## Description

The invention relates to a side screening for a vehicle, comprising at least one support body which is to be fastened to a chassis of the vehicle and an elongate, possibly flat panel designed to be received on the support body.

Such a screening is mainly used on vehicles for the transport of goods. It has been found, especially in city traffic, that lorries, trailers and articulated vehicles may present a major hazard to traffic safety on account of their length. A (motor)cyclist who has swerved off course may end up under a lorry between the axles and then has only a small chance of escaping from contact with the wheels of the lorry, with all the dramatic consequences this entails. Lorries, trailers, and articulated vehicles are fitted with side screenings mounted on either side between the axles at wheel level in order to avoid such accidents. Any cyclist coming into the vehicle's path will hit against the screening now instead of coming under the vehicle.

A known side screening comprises a number of support bodies which are provided so as to fit the vehicle to be equipped therewith and on which a tailor-made plating of polyester reinforced with glass fibre is manually mounted. Since the screening is always designed to fit the specific dimensions of the vehicle, it will be clear that such a screening is highly labour-intensive and accordingly expensive. The present invention has for its object to provide a side screening of the kind mentioned in the opening paragraph which is to a high degree universally applicable irrespective of the specific dimensions of a vehicle and which can accordingly be mounted comparatively quickly and easily thereto.

To achieve the envisaged object, according to the invention, a side screening of the kind mentioned in the opening paragraph is characterized in that the panel comprises at least one elongate profile over at least part of a longitudinal side for receiving a fastening member with movement possibility in said profile, which fastening member is capable of cooperating with a support body so as to achieve a secure connection between the panel and the support body. To mount such a screening, a sufficient number of support bodies is fastened in suitable locations to the chassis of the (articulated) vehicle or trailer, and a corresponding number of fastening members is provided in the profile of the panel. The fastening members may subsequently be shifted in the profile and be guided into the correct positions in dependence on the specific locations of the support bodies. Then the panel is fastened to the support bodies by means of the fastening members, thus securely connecting the screening to the vehicle.

Thanks to the variable positions of the fastening members in the profile, the support bodies can be fastened to the chassis of the vehicle in locations which can be chosen with a comparatively high degree of freedom. The invention thus renders it possible to work with a comparatively universal, prefabricated screening while nevertheless the specific dimensions and equipment of the vehicle can be taken into account. The mounting time of such a highly prefab screening according to the invention can be appreciably shorter than that of a screening which is made to measure, for example on the spot, from glass fibre reinforced polyester so as to fit a specific vehicle.

A special embodiment of the side screening according to the invention is characterized in that the profile comprises a cavity over at least part of its length, in that a wall of the cavity facing away from the panel comprises a slotted hole, in that the fastening member comprises a threaded bolt of which a head is received with movement possibility in said slotted hole, which projects from the slotted hole on either side, and of which a threaded end is passed through the slotted hole, and in that the support body comprises a bore for receiving the threaded end therein. Such a profile is found to be very useful in practice. The threaded bolt used in this embodiment has, for example, a round head and is inserted into the cavity at the end of the profile, which is open for that purpose. It is also possible to use threaded bolts with elongate heads whose width and height are at most equal to the width of the slotted hole, so that the bolts can be inserted into the cavity in any location and be anchored in the profile by means of a rotary movement. In that case the profile may be closed at both ends.

It is often desirable in practice, after the screening has been provided, for the space under the vehicle to be readily accessible for (periodic) maintenance and servicing. To allow for this, a further embodiment of the side screening according to the invention is characterized in that the support body comprises a first part which is to be fastened to the chassis of the vehicle and a second part which is to be fastened to the panel, and in that said two parts are joined to one another with hinging possibility. This screening can always be put in an upright position, if so desired, so as to afford access to the space underneath the vehicle. In addition, such a composite support body leads to a particularly simple mounting of the screening. First the first part of each support body is fastened to the chassis, and the second part is mounted to the panel. Then the second part is moved into position and is fastened to the first part, for example by means of bolts.

To provide for an additional adjustment possibility of the screening, a further embodiment of the side screening according to the invention is characterized in that the first part and the second part of the support body are coupled to one another through the interposition of an intermediate part which is connected to the second part with hinging possibility at one side and which is fastened to the first part with axial adjustment possibility at the other side. Said axial adjustment posibility allows for a height variation of the side screening so as to harmonize optimally with the dimensions, in particular the floor height, of the vehicle. In a special embodiment, such an axial adjustment possibility is achieved in that, of the first part and the intermediate part, at least one part comprises at least one slot for receiving therein a threaded bolt which will interconnect said two parts.

To avoid that such a hinging side screening could be blown upwards during driving, which could jeopardize traffic safety, a special embodiment of such a side screening according to the invention is characterized in that manually operable locking means are present for locking the first and the second part of the support body in mutually at least substantially parallel positions, and in that said locking means are connected to the panel by fastening means which are for this purpose movably arranged in the profile of the panel. To make it possible for the hinging side screening to be held in an opened position, for example while maintenance work is being carried out underneath the vehicle, a special embodiment of such a screening according to the invention is characterized in that the support body is provided with manually operable expander means for fixing the first and the second part in a hinged position relative to one another.

Apart from the suspension from the vehicle in the form of support bodies, which may or may not be composite, the side screening comprises a panel which is to be fastened thereto and which is delivered, for example, at a standard length, so that it can be shortened and/or supplemented with a further such panel on the spot by the user, as desired. A preferred embodiment of the screening according to the invention is in this respect characterized in that the panel is provided at at least one of its shorter ends with an end piece provided on said shorter end and having a suitable edge finish. Such end pieces are separately supplied and can be mounted to the narrower ends of the panel by suitable fastening means. A particularly attractive edge finish is achieved thereby, avoiding sharp edges, for example along saw cuts where the panel has been shortened. Such end pieces accordingly benefit not only the outward appearance of the screening but also traffic safety. In a first further embodiment of this, the side screening is characterized in that the end piece comprises a concave wheel portion of which a radius of curvature approximates a radius of a wheel of the vehicle at least to a certain extent. The object of such an end piece is to provide a particularly attractive finish of a panel end adjacent the wheels of the vehicle. For those cases in which a panel has a blind ending or has a narrower end adjoining a further panel, a further embodiment of a screening according to the invention is characterized in that the end piece comprises a corner portion of which an end facing away from the panel extends substantially transversely to a longitudinal direction of the panel.

In principle, the panel of the side screening according to the invention may be manufactured from a wide range of materials. A preferred embodiment of the screening according to the invention, however, is characterized in that the panel is manufactured from an impact-resistant synthetic material, and in particular from a thermoplastic synthetic resin such as polyurethane and acrylonitrile-butadiene-styrene. An important advantage of the use of a synthetic resin for the panel is formed by the ready shaping possibilities of such a material. Thus the panel may be formed in its entirety, for example, through vacuum moulding, (co-)extrusion, or injection moulding. A thermoplastic material is moreover found to provide the panel with the resilience necessary for the present invention, limiting a lateral deviation thereof in the case of a frontal load being exerted thereon. Such an inward bulging of the panel in the case of a frontal load thereon is further reduced in a further embodiment of the screening according to the invention in that the panel is convex at its side facing away from the profile. A side screening with a panel made from a synthetic resin can thus be made which, given a standardized frontal load thereon, will yield by less than 15 cm, thus complying with the European guidelines which are in force in this respect at the present moment.

The invention also relates to a vehicle which is equipped with such a side screening and to a panel, support body, or any other component for use in the side screening described above. The invention will be explained in more detail below with reference to an embodiment and an accompanying drawing. In the drawing:
Fig. 1 shows a vehicle provided with an embodiment of a side screening according to the invention;
Fig. 2 is a perspective view of the side screening of the vehicle of Fig. 1;
Fig. 3 is an exploded view of a support body as used in the side screening of Fig. 2;
Fig. 4 is an exploded view of a panel as used in the side screening of Fig. 2;
Fig. 5 is a perspective view of a lockable compartment for use in combination with the side screening of Fig. 2; and
Fig. 6 is a perspective view of the compartment of Fig. 5, integrated into the side screening of Fig. 2.
The Figures are purely diagrammatic and not drawn true to scale. Some dimension may have been particularly exaggerated for the sake of clarity. Corresponding parts have been given the same reference numerals as much as possible.

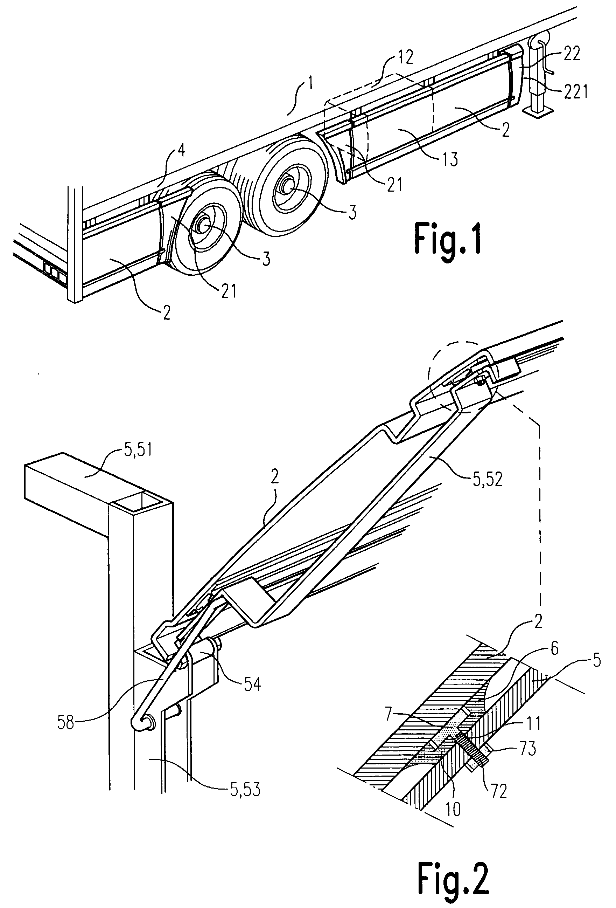

Fig. 1 shows part of a vehicle 1, in this case a trailer of a lorry, which is provided with an embodiment of the side screening according to the invention. The screening in this example comprises two elongate panels 2 on both sides of the vehicle, i.e. behind the double rear axle 3 on the one hand and between the rear axle 3 and the lorry (not shown here) on the other hand. The two panels are fastened to the chassis 4 of the trailer by means of support bodies concealed behind the panels 2, such a support body being preferably provided every 60 to 70 cm so as to give the screening a sufficient rigidity in longitudianl direction. The rearmost panel is fastened by means of two such support bodies in the present case, whereas three support bodies are used for the frontmost panel. It will be obvious, however, that more or fewer support bodies may be used in dependence on the specific length of a panel. The panels 2 are delivered, for example, at a standard length of approximately 3 m and a standard height of 50 or 60 cm, and may be reduced to the desired length in situ. It will be obvious, however, that many alternative standard dimensions are possible within the scope of the invention. The material used for the panels in this example is polyurethane or acrylonitrile-butadiene-styrene (ABS) covered with an ASA coating. These impact-resistant thermoplastic materials offer particular advantages in the application described here on account of their comparatively low intrinsic weight and good shock absorbing properties and can be moulded into the desired shape comparatively easily by means of conventional processing techniques. The shock absorption and the rigidity of the panel are further enhanced in the present example in that the panel is slightly curved so as to present a convex exterior and is profiled in longitudinal direction. The panels are preferably covered with a suitable UV-resistant coating which protects the polyurethane parts against the effects of sunlight in a durable manner.

The panel 2 and its fastening to a support body 5 are shown in more detail in Fig. 2. The support body 5 comprises two mutually transverse legs of which a horizontal leg 5 is fastened, for example, to the loading platform of the chassis 4, for example by means of welds or bolts, while the vertical leg serves to receive a panel 2 thereon. The panel 2 according to the invention comprises at least one elongate profile 6 over at least part of its longitudinal side for the purpose of fastening to the support body 5, which profile serves to accommodate a fastening member 7, a flatheaded bolt in this example, with shifting possibility. Two such profiles 6 are provided in the present example, one at the upper side of the panel 2 and one at the lower side thereof. The profile 6 is shown in more detail in an enlarged drawing, showing more clearly the cavity 8 in which the head 71 of the threaded bolt 7 can move freely. The cavity 8 comprises a slotted hole 9 at its end remote from the panel 2, through which hole the threaded stud 72 of the bolt is passed while the head 71 extends over the slotted hole on either side, resting on the shoulder 10 formed thereby. The threaded bolt 7 in addition projects through a bore 11 provided for this purpose in the support body 5 so as to achieve a secure connection between the panel 2 and the support body 5 through cooperation with a suitable nut 73.

Thanks to the use of such an elongate profile 6 on the inside of the panels 2, the screening according to the invention has a highly universal application and flexible mounting possibilities. Thus the specific positions of the support bodies can be varied with a high degree of freedom, within the limits imposed thereon by the required rigidity of the panels, so as to combine optimally with the specific construction of the vehicle. Shifting of the fastening members 7 in the profile in a corresponding manner renders it readily possible to adapt them to the specific positions of the support bodies. In practice, therefore, the support bodies are mounted in those locations where the chassis of the vehicle already offers suitable fastening possibilities, so that normally the vehicle does not require any specific adaptations. The mounting time of the screening according to the invention can be much shorter than that of its conventional counterpart also as a result of this.

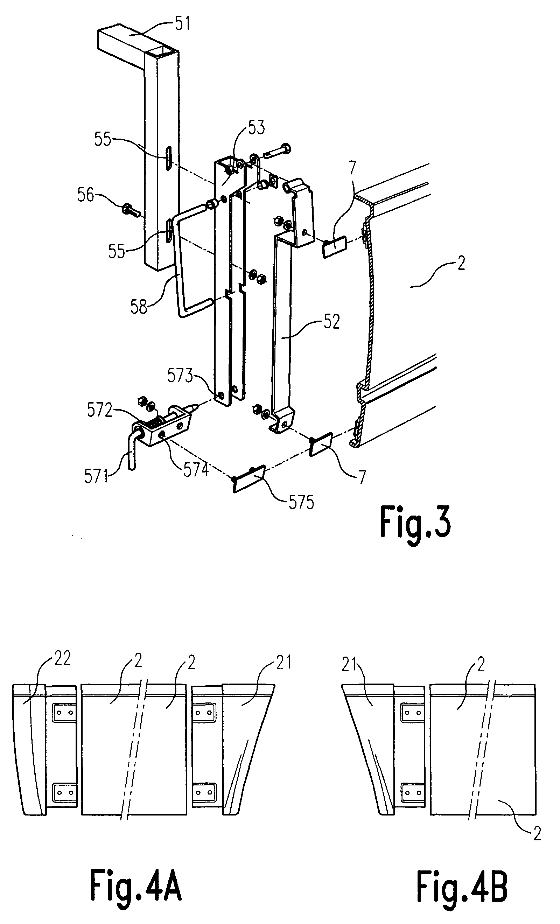

As is shown in more detail in Fig. 3, composite support bodies 5 are used in this example, each comprising a first part 51 which is to be fastened to the chassis of the vehicle and a second part 52 which is fastened to the panel, the two parts being joined together by means of a hinge. To achieve this, an intermediate part 53 is provided between the two parts 51 and 52 which is connected at one side to the second part 52 of the support body by means of a conventional hinge construction 54 and at the other side is fastened to the first part 51 with axial adjustment possibility. This axial adjustment possibility is achieved in the present example in that the first part of the support body is provided with two elongate slots 55 in which threaded bolts 56 interconnecting the two parts 51 and 52 are accommodated. The panel 2 can thus be vertically adjusted so as to maintain a sufficiently small distance to the loading platform 4 on the one hand and a sufficiently great distance to the road surface level on the other hand.

A method is preferably followed for fitting the screening of this example whereby, after the panel has first been shortened, if necessary, the first parts 51 of the support bodies are first fastened to the chassis and the second parts 52 together with the intermediate parts are screwed to the panel, still with shifting possibility. Then the intermediate parts are screwed to the first parts and shifted into the correct position during this. Finally, the screws are tightened, fixedly interconnecting the support bodies and the panel. It is clear from the above how very simple, flexible, universal and fast the mounting of a screening according to this embodiment of the invention can be. This very short mounting time not only reduces the labour cost involved but also the time during which the vehicle is off the road, which is of particular importance for use on existing vehicles.

To protect the screening panel 2 from being inadvertently blown upwards, locking means 57 are provided which fix the first and the second part 51 and 52 of the support body 5 in mutually substantially parallel positions. The locking means for this purpose comprise a locking bolt 571 which is usual and known per se and which projects through a bore 573, provided in the support body 53 for this purpose, under the influence of a spring 572. The locking bolt 571 is movably provided in a bolt body 574 which is mounted to the profile 6 of the panel by fastening means 575 in the form of a threaded bolt similar to the threaded bolt 7 and in a manner similar to that used for the support body 5. Thus the position of the locking means can always be attuned to the final position of the support body 5 so as to safeguard the positioning freedom of the system.

The hinging suspension of the panels 2 from the chassis 4 makes the lower side of the vehicle permanently accessible for (periodic) maintenance and the like. The support bodies 5 are provided with manually operable expander means for keeping the panels in a raised position during this by fixing the first 51 and second part 52 of the support body 5 in mutually hinged positions. In this example, the expander means comprise simple spacer rods 58 which are each placed in a respective fold in the second part, but instead of this, for example, gas springs may also be used, which are easier to operate.

The screening according to the invention described here comprises a complete modular system consisting of a suitable number of support bodies 5 and panels 2 which may or may not be shortened so as to cover the vehicle fully. The system may also be supplemented with a suitable edge finish in the form of end pieces which are provided on the narrow ends of the panels, as is shown in Fig. 1 and in more detail in Fig. 4. Concave wheel portions 21 are mounted adjacent the wheels of the vehicle with a radius of curvature which approximates the radius of the wheels at least to a certain extent. A corner piece may 22 be used, of which an end 221 facing away from the panel 2 extends substantially transversely to a longitudinal direction of the panel 2, at a blind end, such as the front of the trailer in the present example, or at adjoining panels. Such end pieces not only enhance the aesthetic value of the screening, but any sharp or jagged edges at areas of sawcuts, where the panels where shortened, will be covered thereby. The end pieces 21, 22 are again fixed to the panel 6 by means of suitable fastening members and are provided with bores in the correct locations for this purpose, see Fig. 4.

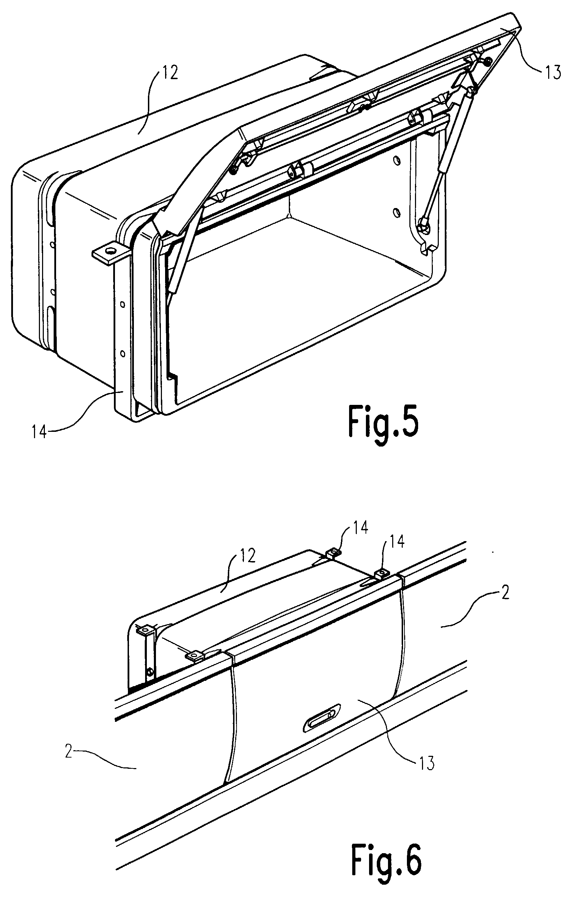

The vehicle may furthermore be equipped with a lockable storage compartment 12 of which a lid 13 is integrated into the screening 2, see Figs. 5 and 6. The compartment is fastened to the chassis of the vehicle in the desired location by means of suitable suspension brackets 14. A portion corresponding to the surface area of the lid 13 is cut from the panel 2 in that location. Especially the lid of the compartment is preferably made from the same material as the panels 2, i.e. in this case again from UV-stabilized polyurethane or ABS with an ASA covering layer. The compartment itself may comprise, for example, a polythene casing. The end result is shown in Fig. 6 and comprises a compartment with a lid whose dimensions and styling correspond to those of the panel 2 and accordingly are in perfect harmony with the appearance of the screening.

The invention thus provides a particularly complete and at the same time universally applicable side screening for a vehicle, which is of a fully modular construction and can be mounted very easily and quickly. The screening has a comparatively low intrinsic weight, also on account of the materials used, and requires little or no maintenance.

Although the invention was explained below with reference to only a single embodiment, it will be clear that the invention is by no means limited to the example given. On the contrary, many more variations and embodiments are possible to those skilled in the art without having to depart from the scope of the invention. Thus it is possible for them to give the panels, the support bodies, and further components other dimensions, they have a comparatively wide choice of specific materials available to them, and it is possible to change the construction of especially the support bodies. Thus, for example, single-part support bodies may be used, each exclusively comprising, for example, the first part of the support body of the kind used in the embodiment. The shape of the support body may also be varied so as to provide a better combination with the specific construction of the vehicle.

## Claims

1. A side screening for a vehicle, comprising at least one support body which is to be fastened to a chassis of the vehicle and an elongate, possibly flat panel designed to be received on the support body, characterized in that the panel comprises at least one elongate profile over at least part of a longitudinal side for receiving a fastening member with movement possibility in said profile, which fastening member is capable of cooperating with a support body so as to achieve a secure connection between the panel and the support body.

2. A side screening as claimed in claim 1, characterized in that the profile comprises a cavity over at least part of its length, in that a wall of the cavity facing away from the panel comprises a slotted hole, in that the fastening member comprises a threaded bolt of which a head is received with movement possibility in said slotted hole, which projects from the slotted hole on either side, and of which a threaded end is passed through the slotted hole, and in that the support body comprises a bore for receiving the threaded end therein.

3. A side screening as claimed in claim 1 or 2, characterized in that the support body comprises a first part which is to be fastened to the chassis of the vehicle and a second part which is to be fastened to the panel, and in that said two parts are joined to one another with hinging possibility.

4. A side screening as claimed in claim 3, characterized in that the first part and the second part of the support body are coupled to one another through the interposition of an intermediate part which is connected to the second part with hinging possibility at one side and which is fastened to the first part with axial adjustment possibility at the other side.

5. A side screening as claimed in claim 4, characterized in that, of the first part and the intermediate part, at least one part comprises at least one slot for receiving therein a threaded bolt which will interconnect said two parts.

6. A side screening as claimed in claim 3, 4, or 5, characterized in that manually operable locking means are present for locking the first and the second part of the support body in mutually at least substantially parallel positions, and in that said locking means are connected to the panel by fastening means which are for this purpose movably arranged in the profile of the panel.

7. A side screening as claimed in claim 3, 4, 5, or 6, characterized in that the support body is provided with manually operable expander means for fixing the first and the second part in a hinged position relative to one another.

8. A side screening as claimed in any one or several of the preceding claims, characterized in that the panel is provided at at least one of its shorter ends with an end piece provided on said shorter end and having a suitable edge finish.

9. A side screening as claimed in claim 8, characterized in that the end piece comprises a concave wheel portion of which a radius of curvature approximates a radius of a wheel of the vehicle at least to a certain extent.

10. A side screening as claimed in claim 8, characterized in that the end piece comprises a corner portion of which an end facing away from the panel extends substantially transversely to a longitudinal direction of the panel.

11. A side screening as claimed in any one or several of the preceding claims, characterized in that the panel is manufactured from an impact-resistant synthetic material.

12. A side screening as claimed in claim 11, characterized in that the synthetic material comprises a thermoplastic synthetic resin.

13. A side screening as claimed in claim 12, characterized in that the panel is manufactured at least substantially from polyurethane or acrylonitrile-butadiene-styrene.

14. A side screening as claimed in any one or several of the preceding claims, characterized in that the panel is convex at its side facing away from the profile.

15. A vehicle provided with a side screening as claimed in any one or several of the preceding claims.

16. A vehicle as claimed in claim 15, characterized in that a lid of a lockable storage compartment is integrated with the side screening, which compartment is fastened to the chassis of the vehicle.

17. A panel, support body, or any other component for use in the side screening as claimed in any one or several of the claims 1 to 14.
